# EUROPEAN PATENT SPECIFICATION

(11) **EP 0 975 911 B1**
(45) Date of publication and mention of the grant of the patent: **12.03.2003**
(21) Application number: 98917921.3
(22) Date of filing: 20.04.1998
(51) Int. Cl.: F16L 25/00, F16L 11/127

(54) **A METHOD AND AN APPARATUS FOR DISCHARGING STATIC ELECTRICITY IN PLASTIC PIPES**
VERFAHREN UND VORRICHTUNG ZUM ENTLADEN VON STATISCHER ELEKTRIZITÄT IN KUNSTSTOFFROHREN
PROCEDE ET APPAREIL DE DECHARGE D'ELECTRICITE STATIQUE DANS DES TUYAUX EN PLASTIQUE

(30) Priority: 21.04.1997 SE 9701484
(43) Date of publication of application: 02.02.2000
(73) Proprietor: KUNGSÖRS PLAST AB, 736 22 Kungsör (SE)
(72) Inventor: ANDERSSON, Thomas, S-736 32 Kungsör (SE)
(74) Representative: Axelsson, Rolf
(86) International application number: SE9800713
(87) International publication number: WO98048207

(56) References cited:
- DE-A- 2 032 539
- DE-B- 1 283 615
- US-A- 5 081 326

## Description

The present invention relates to a method of leading static electricity away from mutually joined plastic pipes of the kind intended for the transportation of gasoline or other hydrocarbons and including an inner barrier layer on their inner wall surfaces. The invention also relates to an arrangement for use in carrying out the method.

Pipes of this kind may suitably be comprised of polyethylene or polypropylene, e.g. MD-polyethylene, and the barrier layer may also include polyethylene or polypropylene, such as HD-polyethylene, in combination with butyl rubber, polyamide or polyester. Such pipes are described in WO 93/09948.

The purpose of the barrier layer is to prevent or substantially reduce the leakage of hydrocarbons by diffusion through the pipe wall. For cost reasons, it is desired to use the thinnest possible barrier layer. A layer thinner than 0.3 mm is difficult to achieve in practice, and it is preferred that the layer has a thickness of 1-2 mm. A barrier layer whose thickness corresponds to 10-15% of the total material thickness is estimated to reduce leakage to 1/10th of that experienced typically in plastic pipes.

Another problem encountered with insulating plastic pipes resides in the static electricity that can be generated by passage of fluid through the pipe. In this respect, it is known to include an electrically conductive material in the barrier layer material, such as finely-divided carbon powder, carbon black, metal particles, metal fibres or like material , therewith making the barrier layer electrically conductive.

Prior publications US-A 5,081,326, DE-A1-1775006, DE-A1-2103394 and DE-A1-2543B11 all describe different methods and arrangements for conducting static electricity away from plastic pipes. These solutions either involve work being carried out on the actual pipes and/or causing the outer shape or dimensions of the pipes to deviate from standard shapes and dimensions, resulting in problems in respect of pipe connections, pipe couplings and the like.

US-A 5,081,326 describes a pipe which is made of polytetrafluoroethylene and which has crimped thereon an outer plastic pipe that contains carbon powder so as to provide the requisite electrical conductivity. Connection of the pipe requires the use of a specially manufactured end-sleeve of complicated design that includes a slotted flange. The nonconductive inner layer is inserted into the slot in the flange, whereas the conductive outer layer is passed over the outer surface of said flange. Connection of the pipe assembly to such a sleeve is a relatively complicated and laborious task. The known sleeve cannot be used to splice or join two pipes end-to-end and affects the outer contours and dimensions of the pipes, therewith preventing its combination with other known splicing or jointing sleeves of standard types.

A particular problem arises when splicing such pipes wherewith it is necessary to establish an electrical connection between the pipes to be spliced. This can require the use of special splicing couplings, which further complicate the work involved with pipe installations and adds further to the cost of such work.

An object of the present invention is to provide a method and an arrangement for conducting away static electricity from spliced plastic pipes of standard types that will have no affect on the outer contours and dimensions of the pipes, and therewith enable the pipes to be spliced or joined together and connected with the aid of mass-produced couplings and jointing pieces of standard designs.

This object is achieved by a method and the arrangement comprising the features of claims 1 and 6.

In accordance with the invention the whole of the barrier layer or longitudinally extending strings of said layer is electrically conductive such as to enable said barrier layer to be utilized as an electrically conductive path along which static electricity will be led away.

In this regard, carbon black or metal particles, for instance, can be admixed with the barrier layer material prior to extruding the barrier layer, or by co-extruding strings of material that includes such additives.

According to the present invention, the conductive layers on respective sides of a splice or join are connected by means of an inner sleeve-like body of electrically conductive material fitted in the pipe. This enables the outer surface of the pipe to remain unaffected and therewith to be spliced and connected with the aid of standard components.

In accordance with the invention, a method of the kind defined in the first paragraph of this document comprises mixing an electrically conductive substance in the inner barrier layers of respective pipes, so as to make the whole of these layers or longitudinally extending strings thereof electrically conductive; placing an electrically conductive sleeve-like body in the ends of two pipe parts to be spliced or joined end-to-end, such as to fully bridge the intermediate joint; and generating contact pressure between the sleeve-like body and the inner surfaces of respective barrier layers at the ends of the two pipe parts, such as to provide an internal, electrically conductive connection between the electrically conductive barrier layers of the mutually spliced or joined pipe parts.

This method can be carried out easily and cheaply and does not affect the pipe laying costs to any appreciable extent, since standard components can be used for splices, joints and connections.

When the plastic pipes are conveniently joined together with the aid of an external welding sleeve that bridges over the joint between the pipes and that is adapted to cause the welding sleeve material to fuse together with the pipe material on respective sides of the joint when the welding sleeve is heated, a contact pressure will be generated between the sleeve-like body fitted in the pipes and the barrier layers of respective pipe as a result of part of the fusion pressure that occurs between the welding sleeve and the tube walls when fusion-welding propagating to the inner surfaces of the pipes and therewith pressing said surfaces against the sleeve-like body.

The sleeve-like body may consist of an essentially rigid sleeve made of electrically conductive metal or plastic.

In order to also generate contact pressure in a direction away from the sleeve and towards the barrier layers, there can also be used a sleeve that has resilient properties.

Other additional features of the method and features of an arrangement for use when practicing the method will be apparent from the dependent Claims.

The invention will now be described with reference to exemplifying embodiments thereof and also with reference to the accompanying drawings.

Fig. 1 is a sectioned view showing the adjacent ends of two pipes that have been mutually joined in accordance with the invention.

Fig. 2 illustrates a jointing sleeve used in the joint shown in Fig. 1.

Fig. 3 is a sectioned view of two pipe ends that have been joined together in accordance with the invention while using a different type of sleeve.

Fig. 4 illustrates the jointing sleeve used in the joint shown in Fig. 3.

Fig. 5 is a sectional view taken through a pipe of a different configuration that can be joined or spliced in accordance with the present invention.

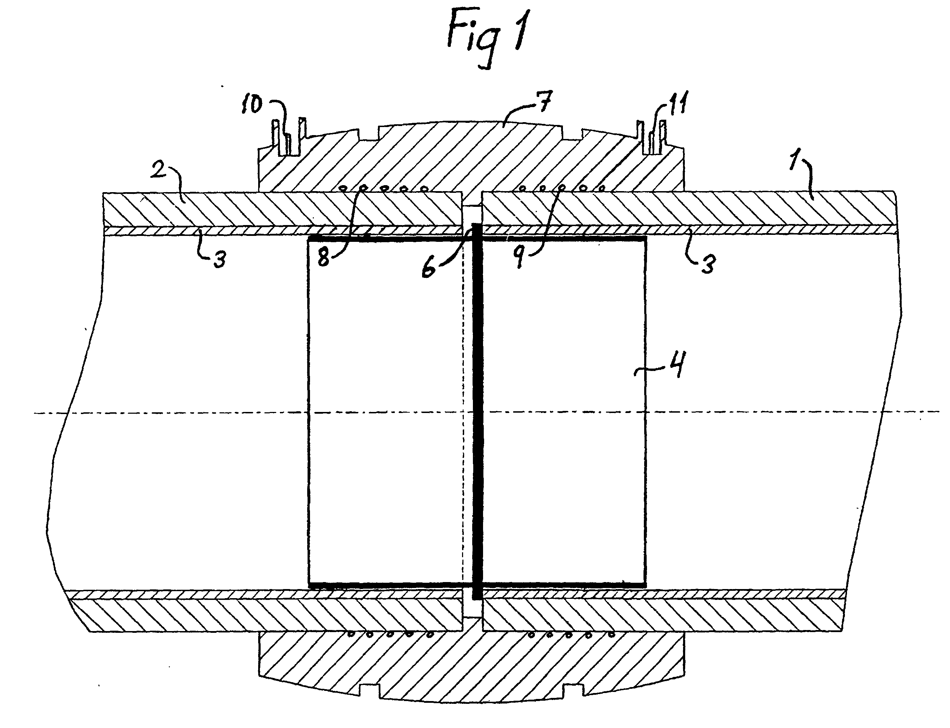

Fig. 1 shows respective ends 1 and 2 of two pipes that are joined end-to-end. The pipes may be intended for the transportation of gasoline in a gasoline station or service station and are therewith suitably made of polypropylene or polyethylene, preferably MD-polyethylene. In order to prevent or substantially reduce leakage through the pipe walls, the inner surfaces of the pipes are provided with a respective barrier layer 3, which may also consist of polypropylene or polyethylene, preferably HD-polyethylene, in combination with butyl rubber, polyamide or polyester, for instance.

With the intention of enabling any static electricity that may be generated as the liquid flows through the pipes to be led away, without needing to modify the outer shape or dimensions of the pipes, which would make the use of standard components for joining and connecting the pipes impossible, a fine carbon powder, carbon black, metal particles or some other electrically conductive material has been mixed with the carrier layer 3, such as to make the carrier layer conductive to the extent required. This layer will therewith fulfil two functions at one and the same time. The cost of imparting to the pipe electrically conductive properties in this way is very low, since no additional extrusion operation or any other modification or alteration of the pipe is required.

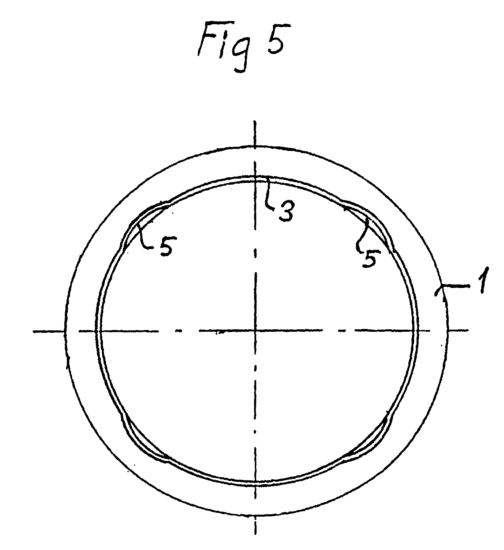

Alternatively, the pipe may have the cross-sectional form illustrated in Fig. 5. In this embodiment, longitudinally extending strings 5 of electrically conductive material are coextruded, as an alternative to making the whole of the barrier layer 3 conductive. The material present in the strings 5 may be identical to the material in the remainder of the barrier layer 3, with the addition of conductive substances, such as carbon black or metal particles. These strings will therewith be embedded in the inner wall of the finished pipe.

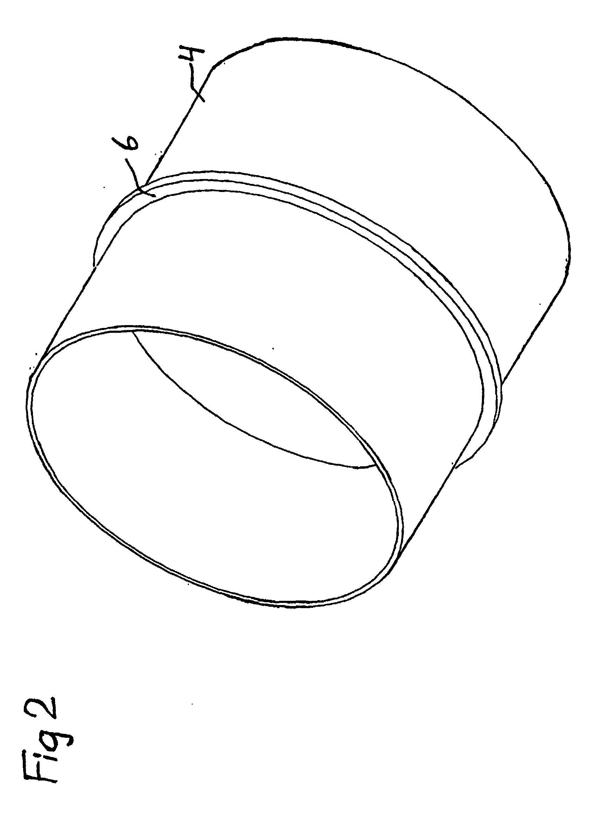

When joining pipes of the kind according to Fig. 1 or Fig. 5, it must be ensured that a conductive path is also established between the pipes to be joined. There is used to this end a sleeve 4 (see also Fig. 2) which is made of a conductive material, suitably a conductive plastic material. Alternatively, the sleeve may be made of steel, for instance. As will be seen from the Figure, the sleeve 4 includes a central, circumferentially extending flange 6.

Reference numeral 7 designates a conventional welding sleeve with built-in heating coils 8 and 9 made of kanthal wire or the like. Reference numerals 10 and 11 designate connection pins for the heating coils.

The pipe ends are joined together by first fitting a welding sleeve 7 over the end of one pipe. The sleeve 4 is then fitted halfway on one pipe end, and the other pipe-end inserted into the outwardly projecting, remaining part of said sleeve. The flange 6 forms, in this respect, an effective stop that ensures that the sleeve is definitely centred correctly over the join between the pipe-ends.

In order to provide a tight joint between the pipe-ends 1 and 2, the pin connectors 10, 11 on the welding sleeve 7 are connected to a voltage source. The coils 8 and 9 will then heat the material in the welding sleeve 7 and in respective pipe-ends 1 and 2, therewith resulting in local fusion of the materials on opposite sides of the join. Since the material primarily melts at the positions of the coils 8, 9, the molten material will be enclosed by the cold material that lies adjacent the coils, therewith preventing lateral seepage of the molten material.

When using MD-polyethylene, the temperature is raised typically to about 200°C, resulting in a volumetric expansion of about 20%. This expansion gives rise to an elevated pressure in the molten material on both sides of the joint, due to the fact that said molten material cannot be pressed-out laterally. The pressure of the melt quickly rises to a peak in the order of 6 bar. The melt pressure can be still higher, when using welding sleeves that have a very fine fit on the pipes.

Part of the resultant melt pressure propagates through the pipe walls 1 and 2 to their inner surfaces and produces a corresponding pressure against the conductive jointing sleeve 4, which may be essentially rigid. This results in an highly effective contact pressure between the jointing sleeve 4 and the barrier layers 3 at respective pipe-ends 1 and 2.

The sleeve 4 thus provides an effective electrical connection between the conductive barrier layers 3 or the conducting strings 4 in the barrier layers of the mutually joined pipes that enables static electricity generated in the pipes to be effectively led away. The use of the sleeve 4 does not affect the outer dimensions of the pipes and enables the pipes to be mutually joined and connected with the aid of mass-produced couplings of a standard type.

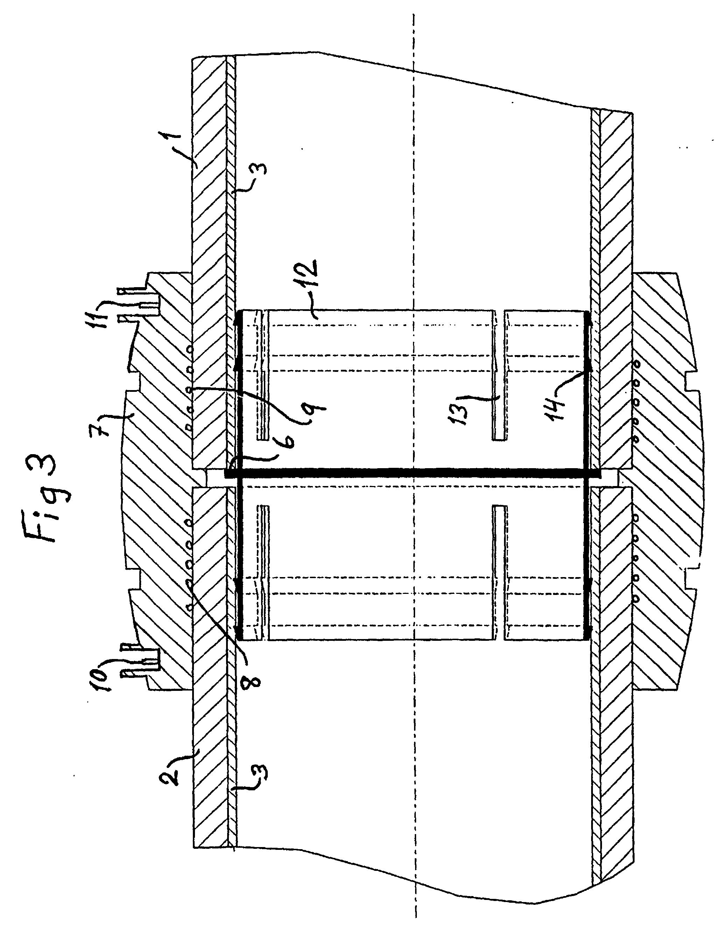

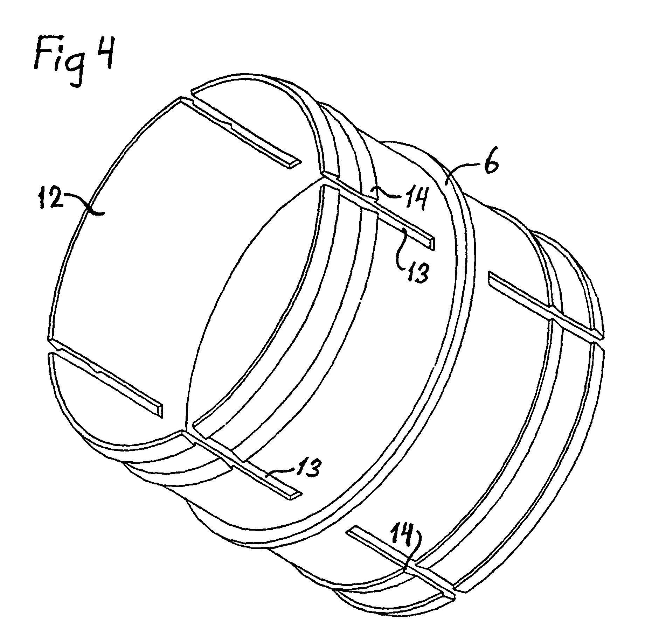

Figs. 3 and 4 illustrate the use of a modified jointing sleeve 12. This sleeve has been given certain spring properties with the aid of axially extending slots 13. Reference numeral 14 designates ring-shaped edges that improve the engagement and contact with the surrounding barrier layer 3 in the pipes 1, 2 when the sleeve 12 is inserted into said pipes, as illustrated in Fig. 3.

When using such a sleeve, which is suitably made of steel, there is obtained as a result of the engagement of the sleeve with the barrier layer in respective pipe-ends, an effective internal, conductive connection between the barrier layers 3 of the two pipes 1, 2 without requiring an outer compressive force to be applied to the pipe ends.

## Claims

1. A method of leading away static electricity in mutually joined plastic pipes of the kind intended for the transportation of gasoline or other hydrocarbons and with which the inner walls of the pipes are provided with an inner barrier layer, which comprises mixing an electrically conductive substance in the inner barrier layer of respective pipes so as to make the whole of said layer or longitudinally extending strings thereof electrically conductive; arranging a sleeve-like body of conductive material in the ends of two pipe-parts to be joined end-to-end, so as to bridge the intermediate joint internally; and generating a contact pressure between the sleeve-like body and the inner surfaces of the barrier layer at the ends of the two pipe-parts so as to provide an inner, electrically conductive connection between the conductive barrier layer of the mutually joined pipe-parts.

2. A method according to Claim 1, in which the plastic pipes are joined together with the aid of an external welding sleeve which bridges the joint between the pipes and which is adapted to cause the material in the welding muff to fuse with the pipe material on both sides of the joint by heating said sleeve, **characterized in that** a contact pressure between the sleeve-like body arranged in the pipes and the barrier layer at the ends of respective pipes is obtained as a result of part of the melt pressure that is generated at the fusion weld between the welding sleeve and the pipe walls propagating to the inner surfaces of the pipes, therewith pressing said inner surfaces against the sleeve-like body.

3. A method according to Claim 2, **characterized in that** the sleeve-like body is a substantially rigid sleeve made of conductive metal or plastic material.

4. A method according to Claim 1 or 2, **characterized by** using a sleeve-like body that has resilient properties such as to generate a contact pressure against the barrier layers surrounding said sleeve.

5. A method according to any one of Claims 1-4, **characterized by** using carbon black or metal particles as said conductive substance.

6. An. arrangement for leading away static electricity in mutually joined plastic pipes (1, 2) of the kind intended for the transportation of gasoline or other hydrocarbons and with which the inner walls of the pipes are provided with an inner barrier layer (3), **characterized in that** the inner barrier layer (3) of the pipes (1, 2) includes an electrically conductive substance that makes the whole of said layers or longitudinally extending strings (5) thereof electrically conductive, and a sleeve-like body (4; 12) of conductive material adapted to be arranged in the ends of two pipe-parts (1, 2) to be joined end-to-end, so that said sleeve-like body (4,12) bridges the intermediate joint internally, wherein a contact pressure is generated between the sleeve-like body (4; 12) and the inner surfaces of the barrier layers (3; 5) at the ends of the two pipe-parts (1, 2) so as to provide an inner, electrically conductive connection between the conductive barrier layers of the mutually joined pipe-parts (1,2).

7. An arrangement according to Claim 6, **characterized in that** the sleeve-like body (4) has the form of an essentially rigid sleeve of conductive material or plastic material.

8. An arrangement according to Claim 6, **characterized in that** the sleeve-like body (12) has the form of a sleeve that includes longitudinally extending slots (13) so as to impart spring-like properties to said body (12),

9. An arrangement according to any one of Claims 6-8, **characterized in that** the sleeve-like body (4; 12) includes a centrally located and circumferentially extending flange (6) that forms a stop means for insertion of the sleeve in respective pipe-parts (1, 2).

## Patentansprüche

1. Verfahren zum Wegleiten von statischer Elektrizität in wechselseitig verbundenen Kunststoffröhren von der Art, die für den Transport von Benzin oder anderen Kohlenwasserstoffen gedacht ist, und bei welchem die inneren Wände der Röhre mit einer inneren Sperrschicht versehen sind, welches umfasst: Mischen einer elektrisch leitenden Substanz in die innere Sperrschicht der jeweiligen Röhren, um so die Gesamtheit der Schicht oder sich längs erstreckende Stränge davon elektrisch leitend zu machen; Anordnen eines buchsenartigen Körpers aus leitendem Material in den Enden der zwei Röhrenteile, die Ende an Ende zu verbinden sind, um so innen die Zwischenverbindungsstelle zu überbrücken; und Erzeugen eines Kontaktdruckes zwischen dem buchsenartigen Körper und den inneren Oberflächen der Sperrschicht an den Enden der zwei Röhrenteile, um so eine innere elektrisch leitende Verbindung zwischen der leitenden Sperrschicht und den wechselseitig verbundenen Röhrenteilen vorzusehen.

2. Verfahren nach Anspruch 1, bei welchem die Kunststoffröhren zusammengefügt werden mit Hilfe einer äußeren Schweißmuffe, welche die Verbindungsstelle zwischen den Röhren überbrückt, und welche angepasst ist, zu bewirken, dass das Material in der Schweißmuffe mit dem Röhrenmaterial auf beiden Seiten der Verbindungsstelle verschmilzt durch Erhitzen der Muffe, **dadurch gekennzeichnet, dass** ein Kontaktdruck zwischen dem buchsenartigen Körper, der in den Röhren angeordnet ist, und der Sperrschicht an den Enden der jeweiligen Röhren erhalten wird als Ergebnis von einem Teil des Schmelzdruckes, der an der Schmelzschweißung erzeugt wird zwischen der Schweißmuffe und den Röhrenwänden, sich zu den inneren Oberflächen der Röhren ausbreitend, dadurch die inneren Oberflächen gegen den buchsenartigen Körper drückend.

3. Verfahren nach Anspruch 2, **dadurch gekennzeichnet, dass** der buchsenartige Körper eine im Wesentlichen steife Muffe ist, die aus einem leitenden Metall oder Kunststoffmaterial hergestellt ist.

4. Verfahren nach Anspruch 1 oder 2, **gekennzeichnet durch** Verwenden eines buchsenartigen Körpers, der elastische Eigenschaften aufweist, um so einen Kontaktdruck gegen die Sperrschichten, die die Muffe umgeben, zu erzeugen.

5. Verfahren nach irgendeinem der Ansprüche 1 bis 4, **gekennzeichnet durch** Verwenden von Ruß oder Metallpartikeln als die leitende Substanz.

6. Anordnung zum Wegleiten statischer Energie in wechselseitig verbundenen Kunststoffröhren (1, 2) von der Art, die für den Transport von Benzin oder anderen Kohlenwasserstoffen gedacht ist, und bei welcher die inneren Wände der Röhren mit einer inneren Sperrschicht (3) versehen sind, **dadurch gekennzeichnet, dass** die innere Sperrschicht (3) der Röhren (1, 2) eine elektrisch leitende Substanz enthält, die die Gesamtheit der Schichten oder sich längs erstreckende Stränge (5) davon elektrisch leitend macht, und einen buchsenartigen Körper (4; 12) aus leitendem Material, der angepasst ist, um in den Enden der zwei Röhrenteile (1, 2) angeordnet zu werden, die Ende an Ende zu verbinden sind, so dass der buchsenartige Körper (4; 12) innen die Zwischenverbindungsstelle überbrückt, wobei ein Kontaktdruck zwischen dem buchsenartigen Körper (4; 12) und den inneren Oberflächen der Sperrschichten (3; 5) an den Enden der zwei Röhrenteile (1, 2) erzeugt wird, um so eine innere elektrisch leitende Verbindung zwischen den leitenden Sperrschichten und der wechselseitig verbundenen Röhrenteile (1, 2) vorzusehen.

7. Anordnung nach Anspruch 6, **dadurch gekennzeichnet, dass** der buchsenartige Körper (4) die Form einer im Wesentlichen steifen Muffe eines leitenden Materials oder Kunststoffmaterials aufweist.

8. Anordnung nach Anspruch 6, **dadurch gekennzeichnet, dass** der buchsenartige Körper (12) die Form einer Muffe aufweist, die sich längs erstreckende Schlitze (13) enthält, um so dem Körper (12) federähnliche Eigenschaften zu verleihen.

9. Anordnung nach irgendeinem der Ansprüche 6 bis 8, **dadurch gekennzeichnet, dass** der buchsenartige Körper (4; 12) einen zentral positionierten und sich umfänglich erstreckenden Flansch (6) enthält, der eine Stoppeinrichtung bildet zum Einsatz der Muffe in die jeweiligen Röhrenteile (1, 2).

## Revendications

1. Procédé pour évacuer l'électricité statique dans des tuyaux en matière plastique réunis entre eux, du type prévu pour le transport d'essence ou d'autres hydrocarbures et à l'aide duquel les parois intérieures des tuyaux sont pourvues d'une couche de barrage, qui comprend le mélange d'une substance électriquement conductrice dans la couche de barrage des tuyaux respectifs de manière à rendre électroconductrice l'ensemble de ladite couche ou de bandes de cette couche, qui s'étendent longitudinalement; la disposition d'un corps en forme de manchon formé d'un matériau conducteur dans les extrémités de deux parties de tuyaux devant être réunies bout-à-bout de manière à combler de façon interne le joint intermédiaire; et la production d'une pression de contact entre le corps en forme de manchon et les surfaces intérieures de la couche de barrage au niveau des extrémités de deux éléments de tuyaux de manière à établir une connexion intérieure électriquement conductrice entre la couche de barrage conductrice des éléments de tuyau réunis entre eux.

2. Procédé selon la revendication 1, selon lequel les tuyaux en matière plastique sont réunis entre eux à l'aide d'un manchon de soudage externe qui comble le joint entre les tuyaux et qui est adapté pour amener le matériau contenu dans le manchon de soudage à fusionner avec le matériau des tuyaux des deux côtés du joint par chauffage dudit manchon, **caractérisé en ce qu'**une pression de contact entre le corps en forme de manchon disposé dans les tuyaux et la couche de barrage au niveau des extrémités de tuyaux respectifs est obtenue en tant que résultat de la pression de fusion qui est produite au niveau de la soudure par fusion entre le manchon de soudage et les parois des tuyaux et qui se propage jusqu'aux surfaces intérieures des tuyaux, ce qui presse lesdites surfaces intérieures contre le corps en forme de manchon.

3. Procédé selon la revendication 2, **caractérisé en ce que** le corps en forme de manchon est un manchon essentiellement rigide formé d'un métal conducteur ou d'une matière plastique.

4. Procédé selon la revendication 1 ou 2, **caractérisé par** l'utilisation d'un corps en forme de manchon qui possède des propriétés élastiques comme par exemple celle de produire une pression de contact contre les couches de barrage entourant ledit manchon.

5. Procédé selon l'une quelconque des revendications 1 à 4, **caractérisé par** l'utilisation de noir de carbone ou de particules métalliques pour constituer ladite substance conductrice.

6. Agencement pour évacuer l'électricité statique dans des tuyaux en matière plastique (1, 2) réunis l'un à l'autre, du type prévu pour le transport d'essence ou d'autres hydrocarbures et dans lequel les parois intérieures des tuyaux sont pourvues d'une couche de barrage intérieure (3), **caractérisé en ce que** la couche de barrage de matériau (3) du tuyau (1, 2) comprend une substance électriquement conductrice qui rend électriquement conductrice l'ensemble desdites couches ou desdites bandes (5) de ces couches qui s'étendent longitudinalement, et un corps en forme de manchon (4; 12) réalisé en un matériau conducteur et adapté pour être disposé dans les extrémités des deux éléments de tuyaux (1, 2) devant être réunis bout-à-bout de sorte que ledit corps en forme de manchon (4; 12) comble intérieurement le joint intermédiaire, et dans lequel une pression de contact est produite entre le corps en forme de manchon (4; 12) et les surfaces intérieures des couches de barrage (3; 5) aux extrémités des deux éléments de tuyaux (1, 2) de manière à établir une connexion intérieure électriquement conductrice entre les couches de barrage conductrice des éléments de tuyau (1, 2) réunis entre eux.

7. Agencement selon la revendication 6, **caractérisé en ce que** le corps en forme de manchon (4) possède la forme d'un manchon essentiellement rigide formé d'un matériau conducteur ou d'une matière plastique.

8. Agencement selon la revendication 6, **caractérisé en ce que** le corps en forme de manchon (12) possède la forme d'un manchon et inclut des fentes longitudinales (13) de manière à conférer des propriétés analogues à celles d'un ressort audit corps (12).

9. Agencement selon l'une quelconque des revendications 6 à 8, **caractérisé en ce que** le corps en forme de manchon (4; 12) inclut une bride (6) qui est disposée d'une manière centrale et s'étend circonférentiellement et qui forme des moyens d'arrêt pour l'insertion du manchon dans les éléments respectifs de tuyau (1, 2).
